# EUROPEAN PATENT APPLICATION

(11) **EP 4 640 470 A2**
(43) Date of publication of application: **29.10.2025**
(21) Application number: 25164425.8
(22) Date of filing: 18.03.2025
(51) Int. Cl.: B60L 3/00, B60L 15/00

(54) **MOTOR CONTROLLER, DISTRIBUTED POWERTRAIN, AND VEHICLE**

(30) Priority: 26.04.2024 CN 202410520010
(71) Applicant: Huawei Digital Power Technologies Co., Ltd., Shenzhen, Guangdong 518043 (CN)
(72) Inventor: CHENG, Yang, Shenzhen, Guangdong, 518043 (CN); ZHAO, Fugao, Shenzhen, Guangdong, 518043 (CN); GUO, Wei, Shenzhen, Guangdong, 518043 (CN); ZHANG, Xiufeng, Shenzhen, Guangdong, 518043 (CN); LIU, Yanbo, Shenzhen, Guangdong, 518043 (CN); ZHAO, Penghui, Shenzhen, Guangdong, 518043 (CN)
(74) Representative: Maiwald GmbH

(57) **Abstract**

This application provides a motor controller, a distributed powertrain, and a vehicle. The motor controller is configured to receive electric power supplied by a power battery and output an alternating current to a drive motor to drive the drive motor. The motor controller is configured to receive, by using a disconnection protection apparatus, electric power supplied by a direct current bus, and the direct current bus is configured to receive, by using a first switch, electric power supplied by the power battery. When the motor controller is faulty, the disconnection protection apparatus is configured to disconnect the direct current bus from the motor controller. When the motor controller is faulty, the disconnection protection apparatus is disconnected, so that fault spreading can be prevented when the motor controller is faulty, and normal operating of another electric drive system can be ensured.

## Description

### TECHNICAL FIELD

This application relates to the vehicle field, and in particular, to a motor controller, a distributed powertrain, and a vehicle.

### BACKGROUND

With the improvement of environmental protection awareness and the continuous development of vehicle technologies, demands for dual-motor driven vehicles and multi-motor driven vehicles are increasing in the market. To avoid a spontaneous vehicle combustion risk caused by a short circuit of a high-voltage circuit of an electric vehicle, a main circuit fuse is usually disposed on an output side of a power battery, and power is supplied to a plurality of electric drive systems through a high-voltage bus. In this case, if one of the electric drive systems is faulty, the main circuit fuse will be fused to ensure safety of the vehicle and passengers. However, before the main circuit fuse is fused, a main contactor on the high-voltage direct current bus may also be faulty and maintenance costs are relatively high. In addition, an electric drive system that is not faulty may also lose power supply, causing the vehicle to lose power.

Therefore, how to prevent, when a fault occurs in one electric drive system, the fault from spreading and affecting normal operating of other electric drive systems is an urgent problem to be resolved.

### SUMMARY

Embodiments of this application provide a motor controller, a distributed powertrain, and a vehicle. A disconnection protection apparatus is disposed for the motor controller, so that fault spreading can be prevented when the motor controller is faulty, and normal operating of another electric drive system can be ensured.

According to a first aspect, a motor controller is provided. The motor controller is configured to receive electric power supplied by a power battery and output an alternating current to a drive motor to drive the drive motor. The motor controller is configured to receive, by using a disconnection protection apparatus, electric power supplied by a direct current bus, and the direct current bus is configured to receive, by using a first switch, electric power supplied by the power battery. When the motor controller is faulty, the disconnection protection apparatus is configured to disconnect the direct current bus from the motor controller.

It should be understood that a specific type of the protection apparatus is not limited in this embodiment of this application. As an example rather than a limitation, the protection apparatus may be a circuit breaker, a fuse, a relay, or the like, and a specific type of the protection apparatus may be selected based on an actual implementation.

It should be understood that the disconnection protection apparatus may be connected in series between an inverter circuit of the motor controller and a direct current input port, and/or between a direct current input port of the motor controller and the first switch on the direct current bus. This is not limited in this embodiment of this application.

Based on the foregoing solution, the disconnection protection apparatus may disconnect the motor controller from the direct current bus when the motor controller is faulty, so that the motor controller stops receiving power supply from the power battery, thereby preventing fault spreading of the motor controller, and ensuring normal working of another component (for example, an electric drive system) mounted to the direct current bus.

With reference to the first aspect, in some implementations of the first aspect, a current received by the direct current bus from the power battery is equal to a current passing through the first switch, and the current received by the direct current bus from the power battery is greater than a current passing through the disconnection protection apparatus. The power battery supplies electric power to the motor controller by using the direct current bus. When the power battery supplies electric power to a plurality of motor controllers simultaneously by using the direct current bus, the plurality of motor controllers are in a parallel connection relationship. In this case, a magnitude of the current received by the direct current bus from the power battery is greater than a magnitude of the current passing through the disconnection protection apparatus, or it may be understood that in this case, a magnitude of the current passing through the direct current bus is greater than a magnitude of the current passing through the disconnection protection apparatus. For example, when the vehicle is a vehicle with front and rear electric drive systems, and the front and rear motor controllers work at the same time, the magnitude of the current passing through the direct current bus is greater than the magnitude of the current passing through the disconnection protection apparatus. In addition, even if the vehicle has only one motor controller, in addition to the motor controller, electric devices that obtain electric power from the direct current bus further include other devices. These electric devices are in a parallel connection relationship, and the current received by the direct current bus from the power battery is greater than the current passing through the disconnection protection apparatus. The direct current bus directly receives, by using the first switch, the electric power supplied by the power battery. Therefore, the current received by the direct current bus from the power battery is equal to the current passing through the first switch.

With reference to the first aspect, in some implementations of the first aspect, the motor controller includes a housing, and the housing is configured to accommodate the inverter circuit and the disconnection protection apparatus.

Based on the foregoing solution, the disconnection protection apparatus is assembled inside the housing of the motor controller, and the motor controller is highly integrated.

With reference to the first aspect, in some implementations of the first aspect, the motor controller includes a control apparatus. The control apparatus is configured to: in response to the current passing through the disconnection protection apparatus being greater than a first current threshold, control the disconnection protection apparatus to be disconnected. Alternatively, the control apparatus is configured to: in response to the current passing through the inverter circuit being greater than a second current threshold, control the disconnection protection apparatus to be disconnected.

It should be understood that, when the current passing through the disconnection protection apparatus or the inverter circuit is excessively high, it indicates that a short-circuit fault may occur in the motor controller. In this case, the fault may be isolated by controlling, in a timely manner, the disconnection protection apparatus to be disconnected, so as to avoid an accident such as fire due to over-temperature caused by the short circuit of the motor controller.

It should be understood that the first current threshold and the second current threshold are preset, and specific values of the first current threshold and the second current threshold are not limited in this embodiment of this application.

Based on the foregoing solution, the control apparatus in the motor controller may control, based on the current passing through the disconnection protection apparatus and/or the current passing through the inverter circuit, the disconnection protection apparatus to be disconnected. This is highly applicable. With reference to the first aspect, in some implementations of the first aspect, the motor controller further includes a temperature sensor, the control apparatus is configured to receive a temperature signal of the temperature sensor, and when a temperature indicated by the temperature sensor is greater than a preset temperature value, the control apparatus controls the disconnection protection apparatus to be disconnected. The temperature sensor herein may be disposed on a surface of the housing of the motor controller, at a heat dissipation waterway inside the motor controller, or at a power device and another electrical element of the motor controller. When the temperature indicated by the temperature sensor is too high, it indicates that the motor controller may be faulty, and the control apparatus controls, in a timely manner, the disconnection protection apparatus to be disconnected to avoid overheating of the motor controller. In this embodiment of this application, one temperature sensor may be disposed, or more temperature sensors may be disposed.

With reference to the first aspect, in some implementations of the first aspect, a first temperature sensor is disposed on a surface of a circuit board of the motor controller, and a second temperature sensor is disposed on an inner surface of the housing of the motor controller. When the temperature indicated by the first temperature sensor is greater than a first preset temperature value or when the temperature indicated by the second temperature sensor is greater than a second preset temperature value, the control apparatus controls the disconnection protection apparatus to be disconnected. The first preset temperature value is greater than the second temperature value. Because an over-temperature position of the motor controller is usually on a circuit component, when the motor controller encounters over-temperature, a temperature at the circuit board is greater than a temperature at the housing. Therefore, when it is determined whether the motor controller encounters over-temperature, the first preset temperature value is greater than the second temperature value.

With reference to the first aspect, in some implementations of the first aspect, when an average value of the temperature indicated by the first temperature sensor and the temperature indicated by the second temperature sensor is greater than a third preset temperature value, the control apparatus controls the disconnection protection apparatus to be disconnected. In a process of determining over-temperature, temperature values collected by a plurality of temperature sensors are considered at the same time, so as to avoid inaccurate determining caused by a failure of a single temperature sensor.

With reference to the first aspect, in some implementations of the first aspect, the motor controller includes a control apparatus, the disconnection protection apparatus includes a control circuit, and the control apparatus is configured to send a current signal to the control circuit, where the current signal indicates a value of the current passing through the disconnection protection apparatus and/or a value of the current passing through the inverter circuit. The control circuit is configured to: in response to the current passing through the disconnection protection apparatus being greater than a first current threshold, control the disconnection protection apparatus to be disconnected. Alternatively, the control circuit is configured to: in response to the current passing through the inverter circuit being greater than a second current threshold, control the disconnection protection apparatus to be disconnected.

It should be understood that the control apparatus may be further configured to send a temperature signal to the control circuit. The temperature signal indicates a temperature or temperatures of one or more positions (for example, one or more of the following positions: the surface of the housing of the motor controller, the heat dissipation waterway inside the motor controller, and a power device and another electrical element of the motor controller) in the motor controller. The control circuit may be further configured to control, based on the temperature signal, the disconnection protection apparatus to be disconnected. For a specific control manner, refer to related descriptions of the control apparatus. Details are not described herein.

Based on the foregoing solution, the disconnection protection apparatus includes an independent control circuit. The control circuit may obtain a current signal from the control apparatus of the motor controller, and independently control, based on the current signal, the disconnection protection apparatus to be disconnected.

With reference to the first aspect, in some implementations of the first aspect, the disconnection protection apparatus includes a current sampling apparatus and a control circuit. The current sampling apparatus is configured to collect a value of the current passing through the disconnection protection apparatus and/or a value of the current passing through the inverter circuit. The control circuit is configured to: in response to the current passing through the disconnection protection apparatus being greater than a first current threshold, control the disconnection protection apparatus to be disconnected. The control circuit is configured to: in response to the current passing through the inverter circuit being greater than a second current threshold, control the disconnection protection apparatus to be disconnected.

Based on the foregoing solution, the disconnection protection apparatus may include the current sampling apparatus; and the control circuit may control, in a timely manner and based on the current value collected by the current sampling apparatus, the disconnection protection apparatus to be disconnected. This is highly instant.

With reference to the first aspect, in some implementations of the first aspect, the motor controller includes a control apparatus, and the control apparatus is configured to: in response to a fault of the motor controller, send a fault signal to a battery management system of the power battery, where the fault signal indicates the battery management system to turn off the first switch.

Based on the foregoing solution, when the motor controller is faulty, the control apparatus may send the fault signal to the battery management system to indicate the battery management system to turn off two switches, so as to ensure that the power battery stops supplying power to the motor controller, thereby further improving safety and reliability of the motor controller.

With reference to the first aspect, in some implementations of the first aspect, the disconnection protection apparatus further includes an arc-extinguishing protection module, and the arc-extinguishing protection module is configured to perform arc-extinguishing protection when the disconnection protection apparatus is disconnected.

It should be understood that a specific structure of the arc-extinguishing protection module is not limited in this embodiment of this application. For example, the arc-extinguishing protection apparatus may be a magnetic blow-out apparatus, a gate plate arc-extinguishing apparatus, a solid gas generation arc-extinguishing apparatus, or the like. A specific type of the arc-extinguishing protection apparatus may be selected based on an actual implementation.

Based on the foregoing solution, the arc-extinguishing protection apparatus may be disposed in the disconnection protection apparatus, so as to avoid a safety risk caused by a high-voltage arc that may be generated when the disconnection protection apparatus is disconnected, and further improve safety of the motor controller.

With reference to the first aspect, in some implementations of the first aspect, the motor controller is used in a vehicle, the vehicle further includes another motor controller and another drive motor, and the another motor controller is configured to receive the electric power supplied by the power battery and drive the another drive motor. In a driving process of the vehicle, the motor controller is configured to: in response to a fault of the another motor controller, increase a current of the alternating current output to the drive motor and power output to the drive motor, to increase torque output by the drive motor and/or power output by the drive motor.

It should be understood that the current of the alternating current is an active current, and is used to increase the torque output by the drive motor; and increasing the current of the three-phase alternating current may be understood as increasing a valid value of the current of the alternating current.

It should be understood that the foregoing power is active power. When the torque output by the drive motor is relatively large, the motor controller may increase the active power output by the drive motor by increasing the active power.

Based on the foregoing solution, in the driving process of the vehicle, in response to a fault of the another motor controller, the motor controller may increase the current of the alternating current output to the drive motor and the power output by the motor controller, to increase the torque output by the drive motor and/or the power output by the drive motor, thereby reducing a power loss of the vehicle caused by the fault of the another motor controller, and implementing a power redundancy function.

According to a second aspect, a distributed powertrain is provided. The distributed powertrain is configured to receive electric power supplied by a power battery and is configured to drive two front wheels or two rear wheels of a vehicle, and the distributed powertrain includes a motor controller, a first drive motor, a second drive motor, and two disconnection protection apparatuses. The motor controller includes a first inverter circuit and a second inverter circuit. The first inverter circuit is configured to receive, by using one disconnection protection apparatus, electric power supplied by a direct current bus and output a first alternating current to the first drive motor, and the second inverter circuit is configured to receive, by using the other disconnection protection apparatus, electric power supplied by a direct current bus and output a second alternating current to the second drive motor. The direct current bus is configured to receive, by using a first switch, the electric power supplied by the power battery. When the first inverter circuit is faulty, the one disconnection protection apparatus is configured to disconnect the first inverter circuit from the direct current bus. When the second inverter circuit is faulty, the other disconnection protection apparatus is configured to disconnect the second inverter circuit from the direct current bus.

Based on the foregoing solution, the disconnection protection apparatuses are separately disposed for two inverter circuits in the distributed powertrain. When one of the inverter circuits is faulty, the disconnection protection apparatus corresponding to the faulty inverter circuit is disconnected, so that power supply to the inverter circuit that is not faulty and another electrical component mounted to the direct current bus is not affected.

With reference to the second aspect, in some implementations of the second aspect, the motor controller further includes a housing. The housing is configured to accommodate the first inverter circuit, the second inverter circuit, and the two disconnection protection apparatuses, and the housing includes two direct current input ports and two alternating current output ports. The first inverter circuit is connected to one direct current input port by using the one disconnection protection apparatus, and receives, through the one direct current input port, electric power supplied by the direct current bus, and the first inverter circuit is configured to output the first alternating current through one alternating current output port. The second inverter circuit is connected to the other direct current input port by using the other disconnection protection apparatus, and receives, through the other direct current input port, the electric power supplied by the direct current bus, and the second inverter circuit is configured to output the second alternating current through the other alternating current output port.

It should be understood that when the housing forms at least one accommodating cavity, the first inverter circuit and the disconnection protection apparatus are located in a same accommodating cavity, and the second inverter circuit and the other disconnection protection apparatus are located in a same accommodating cavity.

As an example rather than a limitation, the first inverter circuit, the second inverter circuit, one protection apparatus, and the other protection apparatus are all assembled in an accommodating cavity formed by the housing of the motor controller.

As an example rather than a limitation, the housing of the motor controller forms two accommodating cavities, and the first inverter circuit and the second inverter circuit are assembled in different accommodating cavities. In this case, one protection apparatus and the first inverter circuit are assembled in a same accommodating cavity, and the other protection apparatus and the second inverter circuit are assembled in a same accommodating cavity.

Based on the foregoing solution, the housing of the motor controller accommodates two inverter circuits and the two disconnection protection apparatuses, and the motor controller is highly integrated.

With reference to the second aspect, in some implementations of the second aspect, the motor controller includes a control apparatus. The control apparatus is configured to: in response to a fault in the first inverter circuit or a fault in the second inverter circuit, send a fault signal to a battery management system of the power battery, where the fault signal indicates the battery management system to turn off the first switch.

Based on the foregoing solution, when the first inverter circuit or the second inverter circuit in the motor controller is faulty, the control apparatus may send the fault signal to the battery management system to indicate the battery management system to turn off the first switch, so as to avoid a bonding fault of the first switch, and further improve safety and reliability of the distributed powertrain.

With reference to the second aspect, in some implementations of the second aspect, the motor controller includes a control apparatus, and the control apparatus is configured to: in response to a current passing through the disconnection protection apparatus being greater than a first current threshold or a current passing through the first inverter circuit being greater than a second current threshold, control the disconnection protection apparatus to be disconnected. The control apparatus is configured to: in response to a current passing through the other disconnection protection apparatus being greater than a first current threshold or a current passing through the second inverter circuit being greater than a second current threshold, control the other disconnection protection apparatus to be disconnected. Based on the foregoing solution, the motor controller may implement centralized control on the first disconnection protection apparatus and the second disconnection protection apparatus by using the control apparatus, and the motor controller is highly integrated.

With reference to the second aspect, in some implementations of the second aspect, the one disconnection protection apparatus includes a first control circuit, and the other disconnection protection apparatus includes a second control circuit. The first control circuit is configured to: in response to a current passing through the one disconnection protection apparatus being greater than a first current threshold or a current passing through the first inverter circuit being greater than a second current threshold, control the one disconnection protection apparatus to be disconnected. The second control circuit is configured to: in response to a current passing through the other disconnection protection apparatus being greater than a first current threshold or a current passing through the second inverter circuit being greater than a second current threshold, control the other disconnection protection apparatus to be disconnected.

Based on the foregoing solution, the two disconnection protection apparatuses in the motor controller are independently controlled by using an internal control circuit, so that subsequent maintenance and replacement is highly convenient.

With reference to the second aspect, in some implementations of the second aspect, the motor controller includes a control apparatus. The control apparatus is configured to send a first current signal to the one disconnection protection apparatus, where the first current signal indicates a value of the current passing through the disconnection protection apparatus and/or a value of the current passing through the first inverter circuit. The control apparatus is configured to send a second current signal to the other disconnection protection apparatus, where the second current signal indicates a value of the current passing through the other disconnection protection apparatus and/or a value of the current passing through the second inverter circuit.

With reference to the second aspect, in some implementations of the second aspect, the one disconnection protection apparatus includes a first current sampling apparatus, and the other disconnection protection apparatus includes a second current sampling apparatus. The first current sampling apparatus is configured to collect and report, to the first control circuit, a value of the current passing through the one disconnection protection apparatus and/or a value of the current passing through the first inverter circuit. The second current sampling apparatus is configured to collect and report, to the second control circuit, a value of the current passing through the other disconnection protection apparatus and/or a value of the current passing through the second inverter circuit.

Based on the foregoing solution, the disconnection protection apparatus in the distributed powertrain may determine, by using the control apparatus of the motor controller or the current sampling apparatus disposed in the disconnection protection apparatus, the current passing through the disconnection protection apparatus and the current passing through a corresponding inverter circuit, so that flexibility is high.

With reference to the second aspect, in some implementations of the second aspect, in the driving process of the vehicle, the motor controller is further configured to: in response to a fault of the first inverter circuit, increase a current of the second three-phase alternating current and power output by the second inverter circuit, to increase torque output by the second drive motor and/or power output by the second drive motor. The motor controller is further configured to: in response to a fault of the second inverter circuit, increase a current of the first three-phase alternating current and power output by the first inverter circuit, to increase torque output by the first drive motor and/or power output by the first drive motor.

It should be understood that the current of the first three-phase alternating current or the current of the second three-phase alternating current is an active current, and is used to increase the torque output by the drive motor. Increasing the current of the three-phase alternating current may be understood as increasing a valid value of the current of the three-phase alternating current.

It should be understood that the foregoing power is active power. When the torque output by the drive motor is relatively large, the motor controller may increase the active power output by the drive motor by increasing the active power.

Based on the foregoing solution, when one inverter circuit in the distributed powertrain is faulty, the other inverter circuit may increase the current of the three-phase alternating current output to the corresponding drive motor and the power output by the motor controller, so as to increase the torque output by the drive motor and the power output by the drive motor, thereby reducing the power loss of the distributed powertrain caused by the fault of the inverter circuit, and improving safety of the distributed powertrain.

According to a third aspect, a vehicle is provided, where the vehicle includes a power battery, a first powertrain, and a second powertrain, the first powertrain is configured to drive two front wheels of the vehicle, and the second powertrain is configured to drive two rear wheels of the vehicle. The first powertrain includes a first motor controller and a first drive motor, and the first motor controller is configured to receive, by using a first disconnection protection apparatus, electric power supplied by a direct current bus, and output a first alternating current to the first drive motor. The direct current bus is configured to receive, by using a first switch, electric power supplied by the power battery. The second powertrain includes a second motor controller and a second drive motor, and the second motor controller is configured to receive, by using a second disconnection protection apparatus, electric power supplied by the direct current bus and output a second alternating current to the second drive motor. The first disconnection protection apparatus is configured to disconnect the first inverter circuit from the power battery when the first motor controller is faulty, and the second disconnection protection apparatus is configured to disconnect the second inverter circuit from the power when the second motor controller is faulty.

It should be understood that specific types of the first disconnection protection apparatus and the second disconnection protection apparatus are not limited in this embodiment of this application. As an example rather than a limitation, the first protection apparatus and the second protection apparatus may be circuit breakers, fuses, relays, or the like, and specific types of the first protection apparatus and the second protection apparatus may be selected based on an actual implementation.

It should be understood that the first disconnection protection apparatus may be assembled inside the first motor controller, or the first disconnection protection apparatus may be assembled on a wire harness between the first motor controller and the direct current bus. This is not limited in this embodiment of this application.

It should be understood that the second disconnection protection apparatus may be assembled inside the second motor controller, or the second disconnection protection apparatus may be assembled on a wire harness between the second motor controller and the direct current bus. This is not limited in this embodiment of this application.

Based on the foregoing solution, when one of the two powertrains in the vehicle is faulty, the disconnection protection apparatus of the motor controller in the powertrain disconnects the motor controller from the direct current bus, to ensure that the faulty motor controller stops receiving power supply from the direct current bus, thereby improving safety and reliability of the vehicle. In addition, power supply of the direct current bus to the other powertrain is not affected, to ensure that the other powertrain continuously provides power for the vehicle, thereby implementing a power redundancy function.

With reference to the third aspect, in some implementations of the third aspect, the vehicle further includes a vehicle control unit, and the vehicle control unit is configured to send a first current signal to the first disconnection protection apparatus, where the first current signal indicates a value of a current passing through the first disconnection protection apparatus; and/or the vehicle control unit is configured to send a second current signal to the second disconnection protection apparatus, where the second current signal indicates a value of a current passing through the second disconnection protection apparatus.

Based on the foregoing solution, the first disconnection protection apparatus and the second disconnection protection apparatus may obtain current signals by using the vehicle control unit of the vehicle, to determine the values of the currents passing through the first disconnection protection apparatus and the second disconnection protection apparatus. This is highly applicable.

With reference to the third aspect, in some implementations of the third aspect, the first powertrain further includes a generator, and the first motor controller further includes a generator inverter circuit; or the second powertrain further includes a generator, and the second motor controller further includes a generator inverter circuit. The generator inverter circuit is configured to receive an alternating current generated by the generator, and supply electric power to the power battery by using a third disconnection protection apparatus. When the generator inverter circuit is faulty, the third disconnection protection apparatus disconnects the power battery from the generator inverter circuit.

Based on the foregoing solution, the vehicle may be a hybrid power vehicle, the first powertrain and/or the second powertrain may be a hybrid powertrain or hybrid powertrains, and an application scope is wide.

For technical effects of the solutions provided in the second aspect and the third aspect, refer to corresponding descriptions in the first aspect. Details are not described again.

### BRIEF DESCRIPTION OF DRAWINGS

FIG. 1 is a diagram of a direct current bus protection apparatus according to this application;
FIG. 2(a) to FIG. 2(c) are diagrams of several architectures of a vehicle 10 according to an embodiment of this application;
FIG. 3(a) and FIG. 3(b) are diagrams of a powertrain according to an embodiment of this application;
FIG. 4 is a diagram of a first disconnection protection apparatus 123 according to an embodiment of this application;
FIG. 5 is a diagram of a distributed powertrain 140 according to an embodiment of this application;
FIG. 6(a) and FIG. 6(b) are diagrams of a hybrid powertrain according to an embodiment of this application; and
FIG. 7 is a diagram of a motor controller 20 according to an embodiment of this application.

### DESCRIPTION OF EMBODIMENTS

The following describes technical solutions of this application with reference to the accompanying drawings.

In descriptions of embodiments of this application, "/" indicates "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists.

In embodiments of this application, prefixes such as "first" and "second" are used only to distinguish different described objects, and do not limit a location, a sequence, a priority, a quantity, or content of described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in the descriptions of embodiments, unless otherwise specified, "a plurality of" means two or more.

Reference to "some embodiments" or the like described in this specification means that specific features, structures, or characteristics described with reference to the embodiments are included in one or more embodiments of this application. Therefore, statements such as "in some embodiments" that appear at different places in this specification do not necessarily mean referring to a same embodiment, but mean "one or more but not all of embodiments", unless otherwise specifically emphasized in another manner. The terms "include", "have", and their variants all mean "include but are not limited to", unless otherwise specifically emphasized in another manner.

With the improvement of environmental protection awareness and the continuous development of vehicle technologies, demands for dual-motor driven vehicles and multi-motor driven vehicles are increasing in the market. When a high-voltage circuit of an electric vehicle is short-circuited, to ensure safety of passengers and the electric vehicle, power supply of a power battery needs to be disconnected when the high-voltage circuit is short-circuited. Otherwise, a drive motor is burnt and even a vehicle is spontaneously combusted.

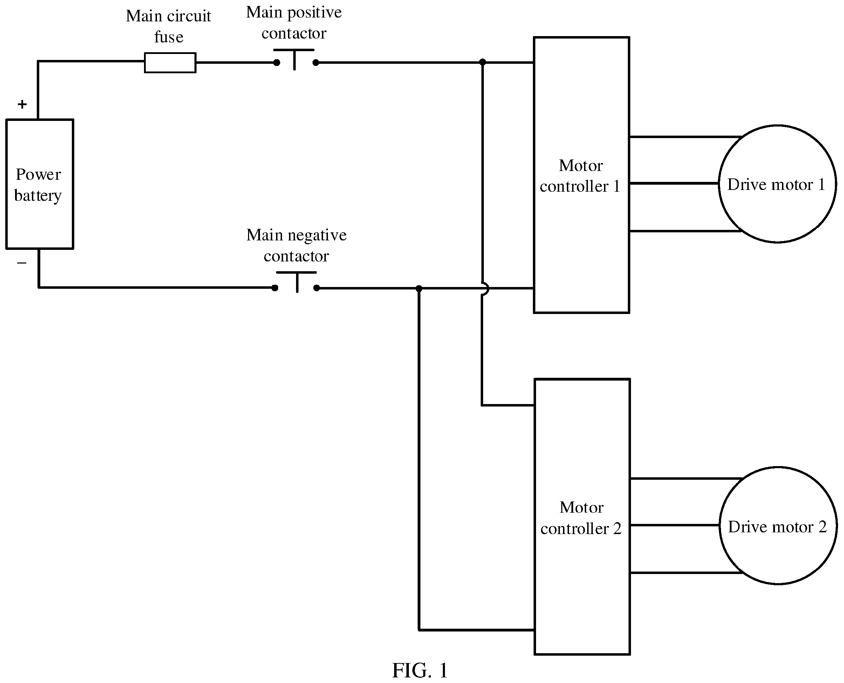

In a possible implementation, as shown in FIG. 1, a main circuit fuse is disposed at an output terminal of the power battery, and supplies electric power to each load, for example, a powertrain, by using a high-voltage direct current bus. For example, front and rear electric drive systems are used in a dual-motor driven vehicle, and the front and rear electric drive systems share a same high-voltage direct current bus to receive electric power supplied by a power battery. In this case, if a motor controller is faulty, for example, a bridge arm inside the motor controller is in a shoot-through state, a main circuit fuse on the high-voltage direct current bus is fused. In this case, the power battery does not output a current, thereby ensuring safety of the vehicle and the passengers.

However, before the main circuit fuse is fused, a main contactor on the high-voltage direct current bus may be adhered, and maintenance costs are relatively high. In addition, because the power battery does not output a current after the main circuit fuse is fused, a normal electrical component that is not faulty in the foregoing implementation, for example, the other motor controller, cannot work due to power loss, and consequently, the vehicle loses power.

In view of this, embodiments of this application provide a motor controller, a distributed powertrain, and a vehicle. A disconnection protection apparatus is added between the motor controller and a high-voltage direct current bus, so that the disconnection protection apparatus can be quickly started when a short circuit fault occurs in the motor controller, thereby avoiding damage to the main circuit fuse and a main contactor on the high-voltage direct current bus, and effectively isolating the fault.

In this embodiment of this application, there may be a plurality of types and positions of the motor controller fault. For example, the motor controller fault includes a short-circuit fault of the motor controller. The short-circuit fault may occur in a power device or another electrical element of the motor controller. The short-circuit fault may also occur in a housing of the motor controller, a wire harness of the motor controller, or a connection between the motor controller and a power battery.

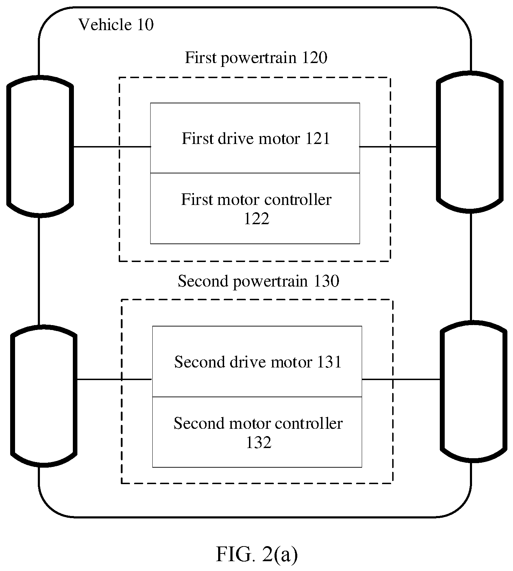

FIG. 2(a) to FIG. 2(c) are diagrams of several possible architectures of a vehicle 10 according to this application.

As shown in FIG. 2(a), the vehicle 10 may include a power battery 110, a first powertrain 120, a second powertrain 130, and four wheels. The first powertrain 120 includes a first drive motor 121 and a first motor controller 122. The first motor controller 122 is configured to output an alternating current to the first drive motor 121 to drive the first drive motor 121. The first powertrain 120 is configured to drive two front wheels of the vehicle 10. The second powertrain 130 includes a second drive motor 131 and a second motor controller 132. The second motor controller 132 is configured to output an alternating current to the second drive motor 131 to drive the second drive motor 131. The second powertrain 130 is configured to drive two front wheels of the vehicle 10.

It should be understood that specific types of the first powertrain 120 and the second powertrain 130 are not limited in this embodiment of this application. As an example rather than a limitation, the powertrains may be centralized powertrains, or may be wheel-hub motor powertrains or wheel-side motor powertrains. For the wheel-hub motor powertrain, a motor and a reducer are directly disposed in a wheel rim, and transmission components such as a driver shaft, a universal joint, a differential, and a transmission are cancelled. For the wheel-side motor powertrain, a motor is disposed on a subframe.

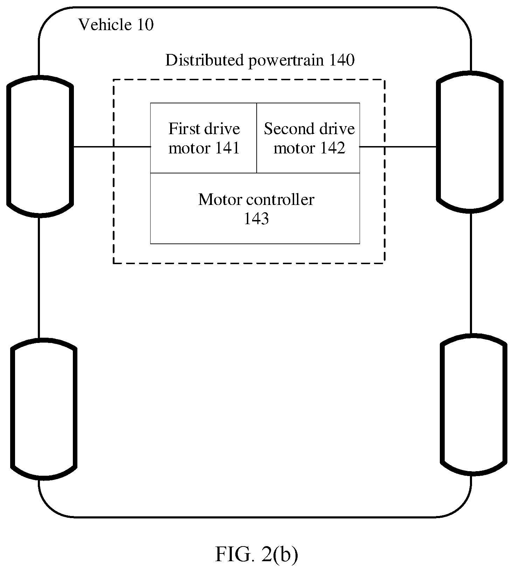

As shown in FIG. 2(b), the vehicle 10 may include a power battery 110 (not shown in FIG. 2(a) to FIG. 2(c)), a distributed powertrain 140, and four wheels. The distributed powertrain 140 includes a first drive motor 141, a second drive motor 142, and a motor controller 143. The first drive motor 141 and the second front drive motor 142 are configured to drive two front wheels or two rear wheels, and the motor controller 143 is configured to output alternating currents to the first drive motor 141 and the second drive motor 142 to drive the two drive motors.

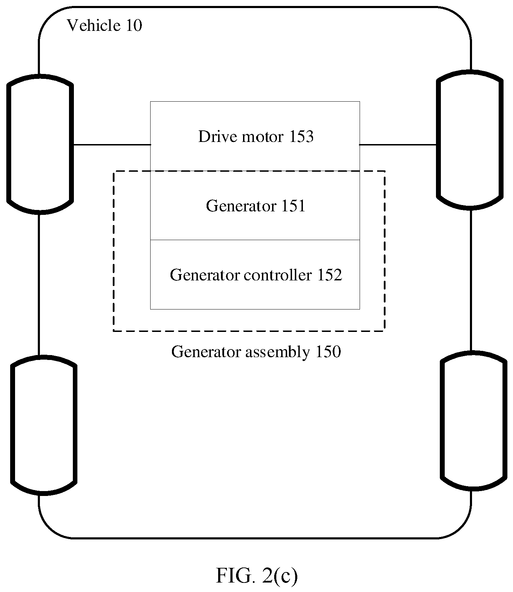

As shown in FIG. 2(c), the vehicle 10 may be a hybrid power vehicle, and the vehicle 10 includes a power battery 110 (not shown in FIG. 2(a) to FIG. 2(c)), a generator assembly 150, and four wheels. The generator assembly 150 includes a generator 151 and a generator controller 152. The generator assembly 150 may further include a drive motor 153. The generator controller may alternatively be integrated with a motor controller as a dual-motor controller, to control the generator 151 and the drive motor 153.

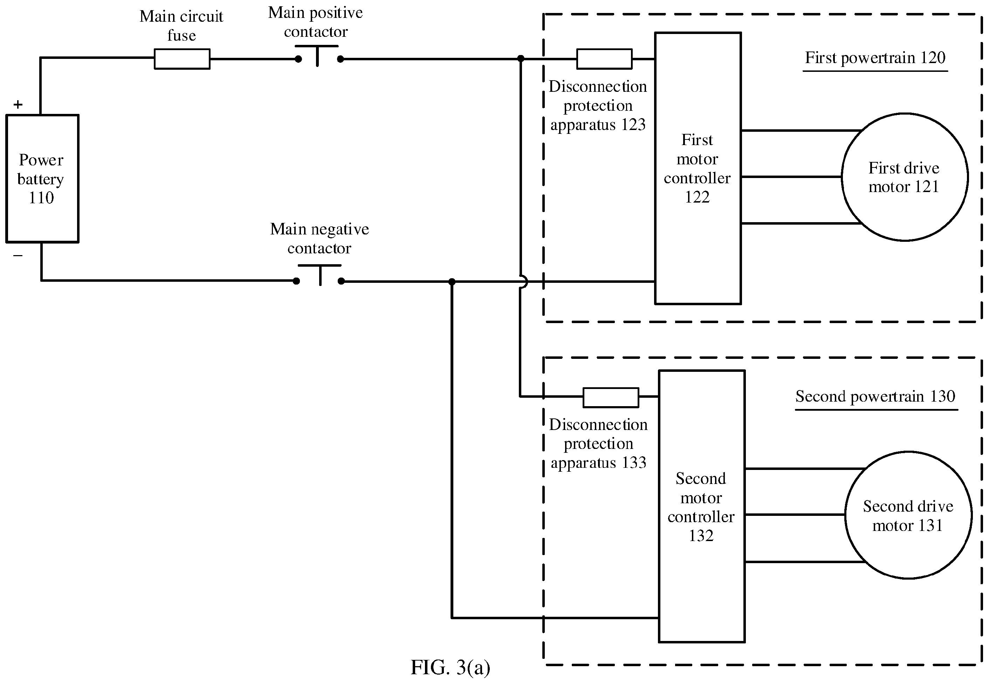

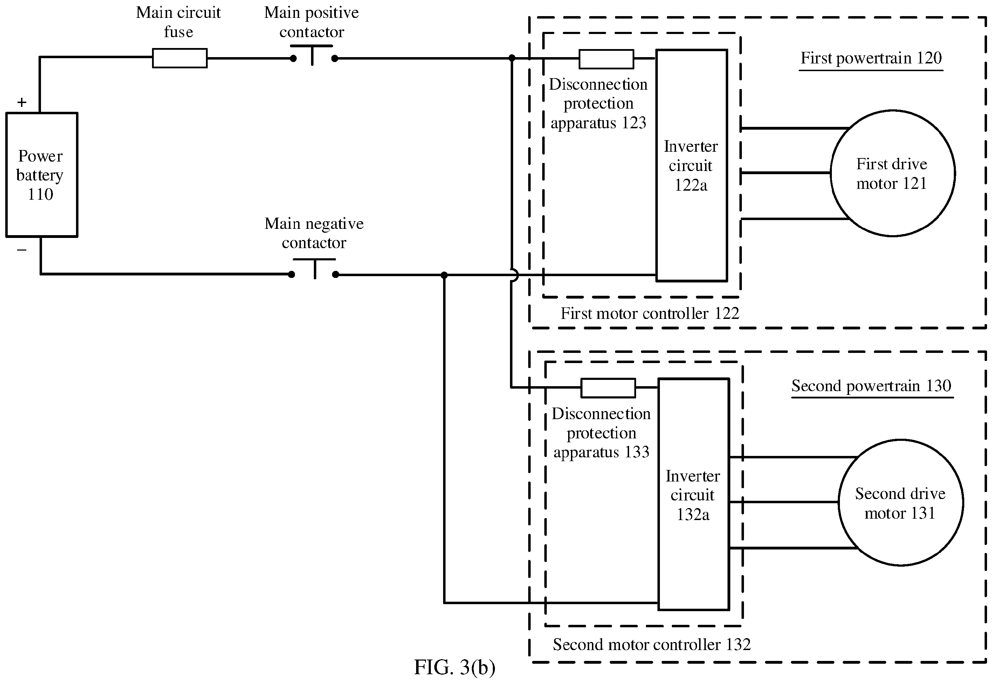

FIG. 3(a) and FIG. 3(b) are diagrams of a powertrain according to an embodiment of this application.

It should be understood that the powertrain may be used in a vehicle in which at least two electrical components are mounted to a direct current bus, for example, a vehicle 10 with two electric drive systems. The powertrain may be the first powertrain 120 or the second powertrain 130 in FIG. 2(a). The following uses the first powertrain 120 as an example for description.

In this embodiment of this application, the first motor controller 122 in the first powertrain 120 receives, by using the first disconnection protection apparatus 123, electric power supplied by the direct current bus, and the direct current bus receives, by using a main contactor, electric power supplied by the power battery 110. The following describes a structure of the first motor controller 122.

### Structure 1

Refer to FIG. 3(a). In some possible embodiments, a direct current input port of the first motor controller 122 is connected to the power battery 110 by using the first disconnection protection apparatus 123, so that the first motor controller 122 may receive the electric power supplied by the power battery 110 and output an alternating current to the first drive motor 121, to drive the first drive motor 121. In other words, the first disconnection protection apparatus 123 is assembled outside a housing of the first motor controller 122 as an independent apparatus.

In these embodiments, the first disconnection protection apparatus 123 may be connected in series between a positive direct current input port of the first motor controller 122 and a positive electrode of the power battery 110, for example, may be connected in series between a positive main contactor and the positive direct current input port of the first motor controller 122. Alternatively, the first disconnection protection apparatus 123 may be connected in series between a negative direct current input port of the first motor controller 122 and a negative electrode of the power battery 110, for example, may be connected in series between a negative main contactor and the negative direct current input port of the first motor controller 122. Alternatively, the first disconnection protection apparatus 123 may include two sub-apparatuses. One sub-apparatus may be connected in series between the positive direct current input port of the first motor controller 122 and the positive electrode of the power battery 110, and the other sub-apparatus may be connected in series between the negative direct current input port of the first motor controller 122 and the negative electrode of the power battery 110. This is not limited in this embodiment of this application.

Further, when the first motor controller 122 is faulty, the first disconnection protection apparatus 123 is configured to disconnect the direct current input port of the first motor controller 122 from the direct current bus. In this case, the power battery 110 stops supplying electric power to the motor controller 122.

In some possible embodiments, the first disconnection protection apparatus 123 may be assembled on an outer part of the housing of the first motor controller 122, so that the power battery 110 may be connected to a direct current input terminal of the first motor controller 122 by using a high-voltage wire harness and the first disconnection protection apparatus 123. The first disconnection protection apparatus 123 may be welded to the outer part of the housing of the first motor controller 122, or may be fastened to the outer part of the housing of the first motor controller 122 by using a bolt, a slide rail, or the like. This is not limited in this embodiment of this application.

In some other possible embodiments, the first disconnection protection apparatus 123 may be assembled on a high-voltage wire harness between the first motor controller 122 and the power battery 110, so that the power battery 110 may be connected to the direct current input terminal of the first motor controller 122 by using the high-voltage wire harness and the first disconnection protection apparatus 123.

### Structure 2

Refer to FIG. 3(b). In some possible embodiments, the direct current input port of the first motor controller 122 is connected to the power battery 110, an input terminal of an inverter circuit 122a in the first motor controller 122 is connected to the direct current input port of the first motor controller 122 by using the first disconnection protection apparatus 123, and an output terminal of the inverter circuit 122a is connected to a three-phase winding of the first drive motor 121, so that the inverter circuit 122a may receive, by using the first disconnection protection apparatus 123, electric power supplied by the power battery 110 and output an alternating current to the first drive motor 121, to drive the first drive motor 121. In other words, the first disconnection protection apparatus 123 may be assembled inside the housing of the first motor controller 122 as an independent apparatus.

In these embodiments, the first disconnection protection apparatus 123 may be connected in series between the positive direct current input port of the first motor controller 122 and a first input terminal of the inverter circuit 122a. Alternatively, the first disconnection protection apparatus 123 may be connected in series between the negative direct current input port of the first motor controller 122 and a second input terminal of the inverter circuit 122a. Alternatively, the first disconnection protection apparatus 123 may include two sub-apparatuses. One sub-apparatus may be connected in series between the positive direct current input port of the first motor controller 122 and the first input terminal of the inverter circuit 122a, and the other sub-apparatus may be connected in series between the negative direct current input port of the first motor controller 122 and the first input terminal of the inverter circuit 122a.

Further, when the first motor controller 122 is faulty, the first disconnection protection apparatus 123 disconnects the direct current input port of the first motor controller 122 from the input terminal of the inverter circuit 122a. In this case, the power battery 110 stops supplying power to the inverter circuit 122a.

Based on the foregoing solution, when the first motor controller 122 is faulty, the first disconnection protection apparatus 123 may disconnect the first motor controller 122 from the power battery 110, so as to avoid damage to the main circuit fuse and the positive and negative main contactors in the power battery 110, thereby improving safety and reliability of the vehicle 10. In addition, power supply of the power battery 110 to another electrical component is not affected, so that it can be ensured that a second powertrain 130 continuously provides power for the vehicle 10, thereby implementing a power redundancy function.

In some possible embodiments, when one powertrain in the vehicle 10 is faulty, a motor controller in the other powertrain may further increase a current of a three-phase alternating current output to a corresponding drive motor and power output by the motor controller, to increase torque output by the drive motor and/or power output by the drive motor, thereby reducing a power loss of the vehicle 10 caused by a powertrain fault, and improving safety of the vehicle 10. The current is an active current, and is used to increase the torque output by the drive motor. The power output by the motor controller is active power. A fault of the powertrain 130 is used as an example. The motor controller 122 in the powertrain 120 may increase a current of a three-phase alternating current output to the drive motor 121 and power output by the motor controller 122, to increase torque output by the drive motor 121 and/or power of the drive motor 122, thereby reducing a power loss of the vehicle 10 caused by the fault of the powertrain 130.

It should be understood that a specific type of the first disconnection protection apparatus is not limited in this embodiment of this application. As an example rather than a limitation, the first disconnection protection apparatus may be a controlled switch apparatus such as a switching transistor or a relay, or may be an apparatus that automatically fuses upon detecting overcurrent, such as a fuse or a fuse link. This is not limited in this application.

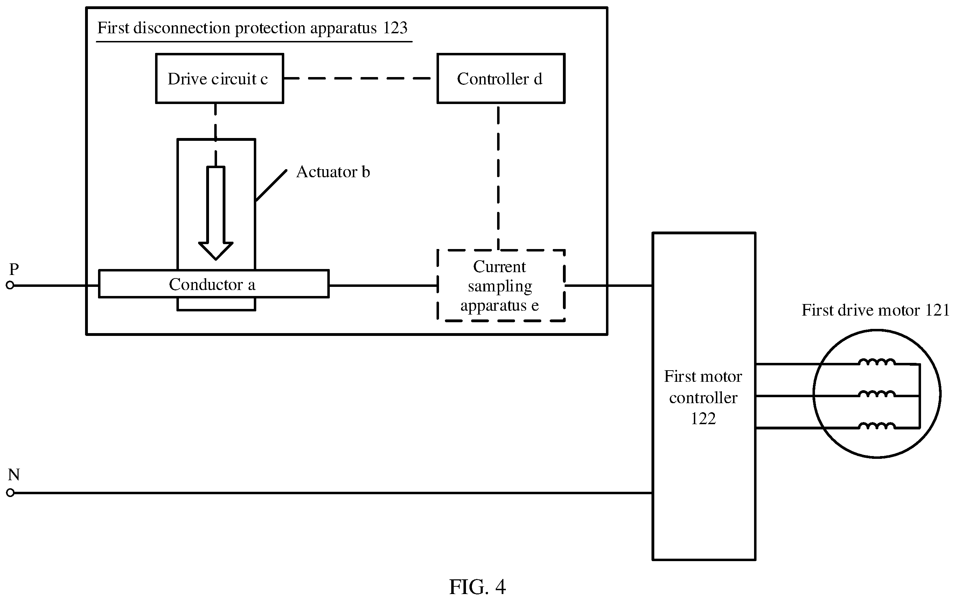

In some possible embodiments, the first disconnection protection apparatus 123 may be a fast turn-off switch. The following describes a structure of the first disconnection protection apparatus 123 with reference to FIG. 4.

Refer to FIG. 4. The first disconnection protection apparatus 123 includes a conductor a, an actuator b, a drive circuit c, and a controller d. It may be understood that, in a normal operating process of the first motor controller 122, the power battery 110 may supply electric power to the first motor controller 122 by using a direct current bus and the conductor a of the first disconnection protection apparatus 123. Further, in response to a fault of the first motor controller 122, the controller d sends a drive signal to the drive circuit c, so as to control the actuator b to quickly disconnect the conductor a, so that the power battery 110 stops supplying power to the first motor controller 122.

In some possible embodiments, the conductor a may be designed as a structure that can be quickly disconnected. For example, the conductor a may be designed as a copper bar with a weak point, and the actuator b may quickly disconnect the weak point of the copper bar in response to a drive signal sent by the drive circuit c.

It should be understood that a specific form of the controller d is not limited in this embodiment of this application.

In some possible embodiments, the controller d may be integrated into a control apparatus 122b of the first motor controller 122. It may be understood that the control apparatus of the first motor controller 122 may control the actuator b to disconnect the conductor a when the first motor controller 122 is faulty. For example, in the structure 1, the controller d of the first disconnection protection apparatus 123 is located inside the housing of the motor controller 122, and another component in the first disconnection protection apparatus 123 is connected in series between the direct current input port of the first motor controller 122 and the direct current bus. For example, in the structure 2, the controller d of the first disconnection protection apparatus 123 is integrated into the control apparatus of the first motor controller 122, and another component in the first disconnection protection apparatus 123 is connected in series between the direct current input port of the first motor controller and the inverter circuit 122a.

In some other possible embodiments, the controller d may be used as an independent control circuit and integrated with another part of the first disconnection protection apparatus 123 into an independent first disconnection protection apparatus 123. It may be understood that the controller d may control, in response to a fault that occurs in the first motor controller 122, the actuator b to disconnect the conductor a. For example, in the structure 1, the first disconnection protection apparatus 123 may be connected in series between the direct current input port of the first motor controller 122 and the direct current bus. For example, in the structure 2, the first disconnection protection apparatus 123 may be connected in series between the direct current input port of the first motor controller and the inverter circuit 122a.

It should be understood that a specific manner in which the controller d determines that the first motor controller 122 is faulty is not limited in this embodiment of this application.

It may be understood that each line controlled by the first motor controller 122 includes a detection apparatus, and the detection apparatus is configured to detect a current in a circuit and send a current signal to the control apparatus 122b.

In some possible embodiments, the controller d is integrated into the control apparatus 122b, and the control apparatus 122b may send a drive signal to the drive circuit c when a current flowing through the first disconnection protection apparatus 123 is greater than a first current threshold, or when a current flowing through any one of three-phase bridge arms of the inverter circuit 122a is greater than a second current threshold, to drive the actuator b to disconnect the conductor a. The control apparatus 122b may determine current values at a plurality of positions in the circuit by using a current sampling apparatus inside the first motor controller 122.

It should be understood that the first current threshold and the second current threshold are preset, and specific values of the first current threshold and the second current threshold are not limited in this embodiment of this application.

In some other possible embodiments, the controller d is used as an independent control circuit, and the controller d may receive a first fault signal from the control apparatus 122b, and send a drive signal to the drive circuit c in response to the first fault signal, to drive the actuator b to disconnect the conductor a.

In some other possible embodiments, the controller d is used as an independent control circuit, and the controller d may receive a first current signal sent by the control apparatus 122b, where the first current signal indicates a current flowing through the first disconnection protection apparatus 123, or a current flowing through any one of three-phase bridge arms of the inverter circuit 122a. The controller d may send a drive signal to the drive circuit c when the current flowing through the first disconnection protection apparatus 123 is greater than a first current threshold, or when the current passing through any one of the three-phase bridge arms of the inverter circuit 122a is greater than a second current threshold, to drive the actuator b to disconnect the conductor a.

It should be noted that the first fault signal and the first current signal may alternatively be sent by a vehicle control unit (Vehicle Control Unit, VCU) of the vehicle 10. This is not limited in this embodiment of this application.

In still some possible embodiments, the fast turn-off switch further includes a current sampling apparatus e. The current sampling apparatus e may be configured to sample a current flowing through the first disconnection protection apparatus 123, and/or a current flowing through any one of three-phase bridge arms of the inverter circuit, and the like.

It may be understood that the current sampling apparatus may report a collected current value to the controller d by using a third current signal, so that the controller d may determine, based on the third current signal, whether the first motor controller 122 is faulty, and when the first motor controller is faulty, control, in a timely manner, to disconnect the power battery pack 110 from the first motor controller 122. For example, the controller d may send a drive signal to the drive circuit c when a current that is indicated by the third current signal and that flows through the first disconnection protection apparatus 123 is greater than the first current threshold, to drive the actuator b to disconnect the conductor a.

It may be understood that when the controller d is integrated into the control apparatus 122b of the first motor controller 122 as a control circuit, the current sampling apparatus e may be integrated into the first motor controller 122 together with the controller d, or the current sampling apparatus e may be integrated with another component of the first disconnection protection apparatus 123. This is not limited in this embodiment of this application.

It may be understood that, with the first disconnection protection apparatus 123, a time from occurrence of a fault to completion of circuit switching by the first disconnection protection apparatus 123 may be less than a first time threshold, so as to prevent the fault from spreading to a side of the power battery 110. The first time threshold is a period from a time at which a fault occurs to a time at which a component on the side of the power battery 110 starts to be damaged. For example, the first time threshold may be shortest period in which a single battery, a main circuit fuse, a main positive contactor, or a main negative contactor in the power battery is damaged.

In some possible embodiments, the first disconnection protection apparatus 123 further includes an arc-extinguishing protection module f (not shown in the figure). The arc-extinguishing protection module f is configured to perform arc-extinguishing protection when the actuator b disconnects the conductor a, to avoid a safety accident caused by a high-voltage arc generated when the conductor a is disconnected. For example, the arc-extinguishing protection apparatus may be a magnetic blow-out apparatus, a gate plate arc-extinguishing apparatus, a solid gas generation arc-extinguishing apparatus, or the like. This is not limited in this embodiment of this application.

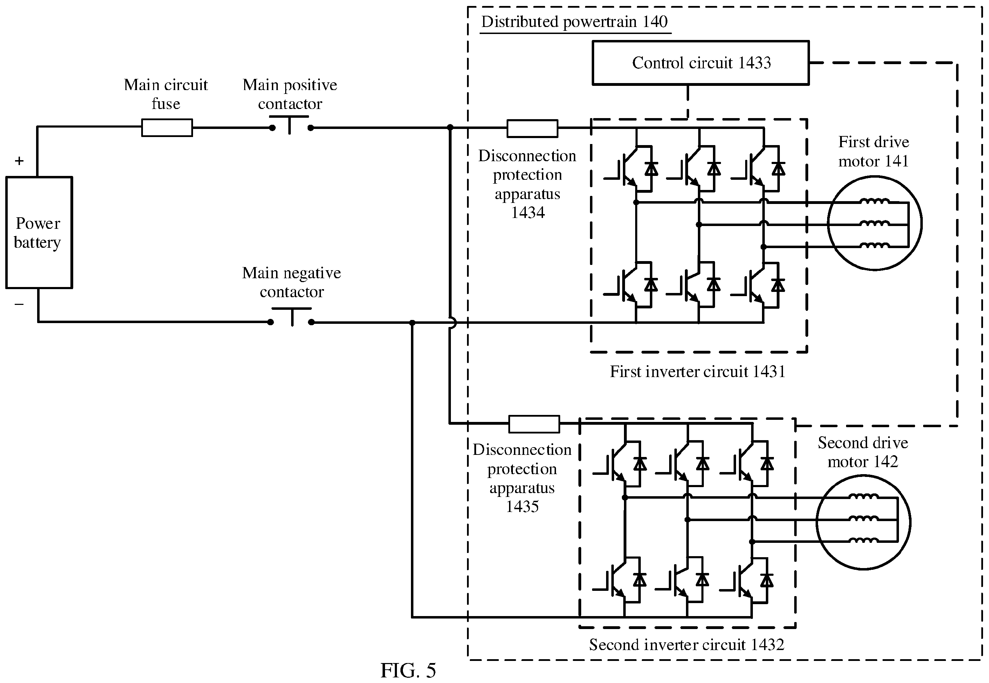

FIG. 5 is a diagram of a distributed powertrain 140 according to an embodiment of this application.

Refer to FIG. 5. The distributed powertrain 140 includes a first drive motor 141, a second drive motor 142, and a motor controller 143. The motor controller 143 includes a first inverter circuit 1431, a second inverter circuit 1432, and a control circuit 1433. The first inverter circuit 1431 is configured to connect to the drive motor 141, and the second inverter circuit 1432 is configured to connect to the drive motor 142. The first inverter circuit 1431 is configured to receive electric power supplied by a direct current bus and output a first three-phase alternating current to the first drive motor 141. The second inverter circuit 1432 is configured to receive electric power supplied by the direct current bus and output a second three-phase alternating current to the second drive motor 142. The direct current bus is configured to receive electric power supplied by a power battery 110 by using a main contactor.

Specifically, the first inverter circuit 1431 includes three bridge arms connected in parallel, each bridge arm includes an upper bridge arm switching transistor and a lower bridge arm switching transistor, and a midpoint of each bridge arm is configured to connect to a phase winding of the first drive motor 141. The control circuit 1433 is configured to control conduction and cut-off of each switching transistor in the first inverter circuit 1431 and each switching transistor in the second inverter circuit 1432.

Still refer to FIG. 5. The motor controller 143 further includes disconnection protection apparatuses 1434 and 1435. The disconnection protection apparatus 1434 is configured to disconnect the first inverter circuit 1431 from the direct current bus when the first inverter circuit 1431 is faulty. The disconnection protection apparatus 1435 is configured to disconnect the second inverter circuit 1432 from the direct current bus when the second inverter circuit 1432 is faulty.

It should be understood that installation positions of the disconnection protection apparatuses 1434 and 1435 are not limited in this embodiment of this application. The following uses an example in which the protection apparatus 1434 is disconnected for description.

In some possible embodiments, the motor controller includes a first direct current input terminal and a second direct current input terminal. The first direct current input terminal is configured to connect to a positive electrode of the power battery 110, and the second direct current input terminal is configured to connect to a negative electrode of the power battery 110. The first inverter circuit 1431 and the second inverter circuit 1432 may share a direct current input terminal of the motor controller 143, that is, one terminal of the first inverter circuit 1431 and one terminal of the second inverter circuit 1432 are connected to the first direct current input terminal, and the other terminal of the first inverter circuit 1431 and the other terminal of the second inverter circuit 1432 are connected to the second direct current input terminal.

In these implementations, the disconnection protection apparatus 1434 is connected in series between an input terminal of the first inverter circuit 1431 and the direct current input terminal of the motor controller 143. As an example rather than a limitation, the disconnection protection apparatus 1434 may be connected in series between the first direct current input terminal and one terminal of the first inverter circuit 1431. As an example rather than a limitation, the disconnection protection apparatus 1434 may be connected in series between the second direct current input terminal and the other terminal of the first inverter circuit 1431. As an example rather than a limitation, the disconnection protection apparatus 1434 may include two sub-apparatuses. One sub-apparatus may be connected in series between the first direct current input terminal and one terminal of the first inverter circuit 1431, and the other sub-apparatus may be connected in series between the second direct current input terminal and the other terminal of the first inverter circuit 1431.

In some other possible embodiments, the motor controller includes two groups of direct current input ports. The first inverter circuit 1431 is configured to receive, by using the first direct current input port group, electric power supplied by the power battery 110. The second inverter circuit 1432 is configured to receive, by using the second direct current input port group, electric power supplied by the power battery 110. That is, two ends of the first inverter circuit 1431 are connected to the first direct current input port group, and two ends of the second inverter circuit 1432 are connected to the second direct current input port group.

In these implementations, the disconnection protection apparatus 1434 may be connected in series between the first direct current input port group and the direct current bus. As an example rather than a limitation, the disconnection protection apparatus 1434 may be connected in series between a positive direct current input port in the first direct current input port group and a positive direct current bus. As an example rather than a limitation, the disconnection protection apparatus 1434 may be connected in series between a negative direct current input port in the first direct current input port group and a negative direct current bus. As an example rather than a limitation, the disconnection protection apparatus 1434 may include two sub-apparatuses. One sub-apparatus may be connected in series between the positive direct current input port in the first direct current input port group and the positive electrode of the power battery 110, and the other sub-apparatus may be connected in series between the negative direct current input port in the first direct current input port group and the negative electrode of the power battery 110.

In these embodiments, the disconnection protection apparatus 1434 may be further connected in series between the first direct current input port group and the first inverter circuit 1431. It may be understood that, for a specific manner in which the disconnection protection apparatus 1434 is connected in series between the first direct current input port group and the first inverter circuit 1431, reference may be made to the foregoing descriptions. Details are not described herein.

It should be understood that for specific descriptions of the disconnection protection apparatus 1434, reference may be made to related content of the first disconnection protection apparatus 123. Details are not described herein.

Based on the foregoing solution, when the first inverter circuit 1431 is faulty, the disconnection protection apparatus 1434 may disconnect the first inverter circuit 1431 from the power battery 110, so as to avoid damage to the main circuit fuse and positive and negative main contactors in the power battery 110, thereby improving safety and reliability of the vehicle 10.

In some possible embodiments, when one inverter circuit in the distributed powertrain 140 is faulty, the other inverter circuit may increase a current of a three-phase alternating current output to a corresponding drive motor and power output by the motor controller, so as to increase torque output by the drive motor and/or power output by the drive motor, thereby reducing a power loss of the distributed powertrain 140 caused by a fault of the inverter circuit, and improving safety of the distributed powertrain 140. The current is an active current, and is used to increase the torque output by the drive motor. The power output by the motor controller is active power. The first inverter circuit 1431 is used as an example. The second inverter circuit 1432 may increase a current of the second three-phase alternating current output to the drive motor 142 and power output by the motor controller 143, so as to increase torque output by the drive motor 142 and/or power of the drive motor 143, thereby reducing a power loss of the distributed powertrain 140 caused by a fault of the first inverter circuit 1431.

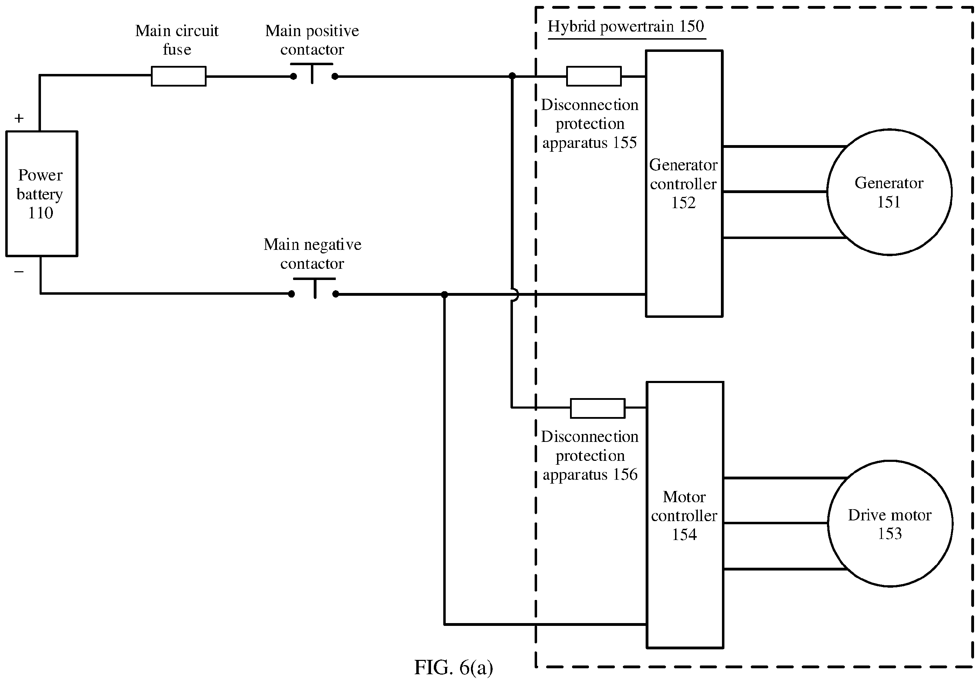

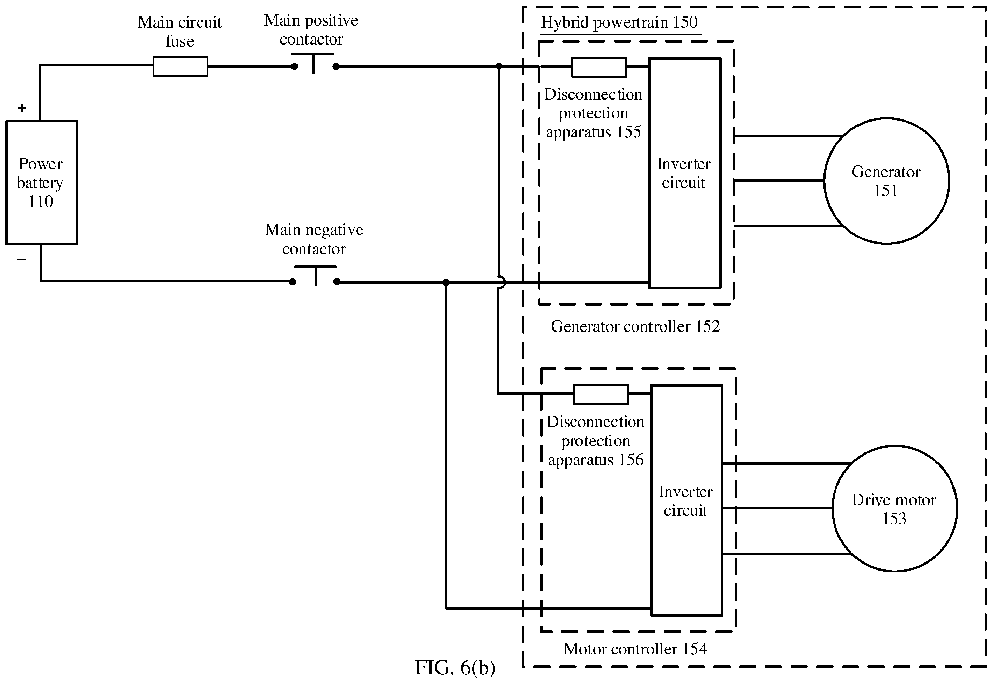

FIG. 6(a) and FIG. 6(b) are diagrams of a hybrid powertrain according to an embodiment of this application.

In FIG. 6(a) and FIG. 6(b), the generator assembly 150 shown in FIG. 2(c) is a hybrid powertrain. The hybrid powertrain includes a generator 151, a generator controller 152, a drive motor 153, and a motor controller 154. The motor controller 154 is configured to receive electric power supplied by a power battery 110 to output a three-phase alternating current to the drive motor 153. The generator controller 152 is configured to receive an alternating current output by the generator 151 and output a direct current to the power battery 110 to charge the power battery 110.

In some possible embodiments, the motor controller 154 and the generator controller 152 may be integrated into a dual-motor controller including a drive motor inverter circuit and a generator inverter circuit. This is not limited in this embodiment of this application. It may be understood that a manner in which the drive motor inverter circuit in the dual-motor controller and the drive motor are connected remains unchanged, and a manner in which the generator inverter circuit and the generator remains unchanged. Details are not described herein.

It should be understood that a specific manner in which the generator 1013 generates power is not limited in this embodiment of this application. For example, the generator 1013 may be driven by an internal combustion engine, so that the generator 1013 converts mechanical energy into electric energy in a torque output process and transmits the electric energy to a battery module 111, to charge the battery module 111.

Refer to FIG. 6(a). In some possible embodiments, a direct current input terminal of the generator controller 152 is connected to the power battery 110 by using a disconnection protection apparatus 155. The disconnection protection apparatus 155 is configured to disconnect the generator controller 152 from the power battery 110 when the generator controller 152 is faulty. In other words, the disconnection protection apparatus 155 is assembled outside a housing of the generator controller 152 as an independent apparatus.

Refer to FIG. 6(b). In some possible embodiments, a direct current input terminal of the generator controller 152 is connected to the power battery 110, a direct current side of an inverter circuit 152a in the generator controller 152 is connected to a direct current input port of the generator controller 152 by using the disconnection protection apparatus 155, an alternating current side of the inverter circuit 152a is connected to a three-phase winding of the generator 151, and the disconnection protection apparatus 155 is configured to disconnect the direct current input port of the generator controller 152 from the inverter circuit when the generator controller 152 is faulty, so as to disconnect the generator controller 152 from the power battery 110. In other words, the disconnection protection apparatus 155 may be assembled inside the housing of the generator controller 152 as an independent apparatus.

It should be understood that, for a specific installation position of the disconnection protection apparatus 155, reference may be made to related descriptions in FIG. 3(a) and FIG. 3(b). Details are not described herein.

Similarly, for specific descriptions of the motor controller 154, refer to related content in FIG. 3 (a) and FIG. 3(b). Details are not described herein.

Based on the foregoing solution, when the generator controller 152 is faulty, the protection apparatus 155 disconnects the generator controller 152 from the power battery 110. In this case, the generator controller 152 stops supplying power to the power battery 110, and therefore safety and reliability are high.

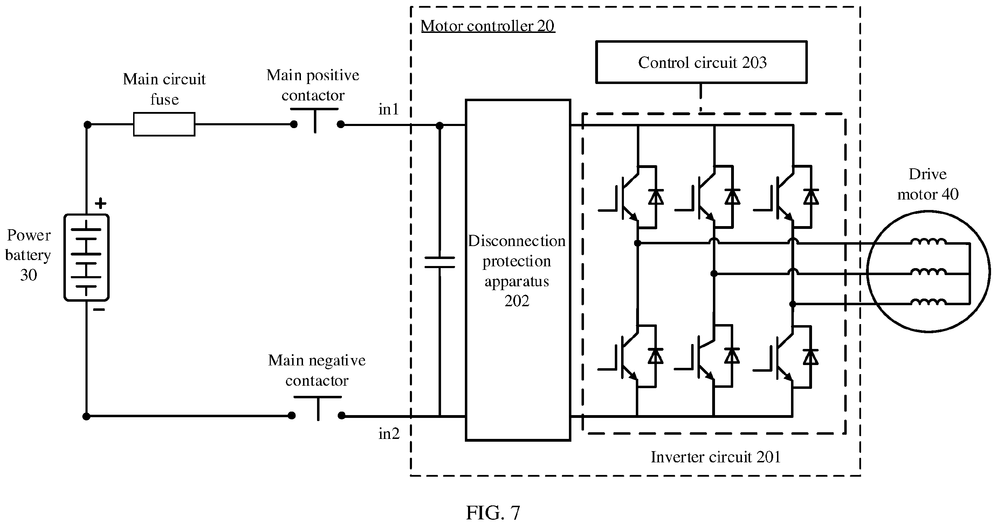

FIG. 7 is a diagram of a motor controller 20 according to an embodiment of this application.

Refer to FIG. 7. The motor controller 20 is configured to receive, by using a disconnection protection apparatus 202, electric power supplied by a direct current bus. The direct current bus is configured to receive, by using a main contactor, electric power supplied by a power battery 30. The motor controller 20 includes two direct current input terminals in1 and in2, an inverter circuit 201, and a disconnection protection apparatus 202. Specifically, one direct current input terminal in1 of the motor controller 40 is configured to connect to a positive electrode of the power battery 30 by using a positive direct current bus, and the other direct current input terminal in2 is configured to connect to a negative electrode of the power battery 30 by using a negative direct current bus. One terminal of the inverter circuit 201 is connected to the direct current input terminal in1, and the other terminal of the inverter circuit 201 is connected to the other direct current input terminal in2.

In some possible embodiments, the disconnection protection apparatus 202 is connected in series between one terminal of the inverter circuit 201 and the direct current input terminal in1, and/or the disconnection protection apparatus 202 is connected in series between the other terminal of the inverter circuit 201 and the other direct current input terminal in2. It may be understood that the disconnection protection apparatus 202 is configured to: when the motor controller 20 is faulty, disconnect one terminal of the inverter circuit 201 from the direct current input terminal in1, and/or disconnect the other terminal of the inverter circuit 201 from the other direct current input terminal in2.

In some other possible embodiments, the disconnection protection apparatus 202 is connected in series between the direct current input terminal in1 and the positive direct current bus, and/or the disconnection protection apparatus 202 is connected in series between the other direct current input terminal in2 and the negative direct current bus. It may be understood that the disconnection protection apparatus 202 is configured to: when the motor controller 20 is faulty, disconnect the one direct current input terminal in1 from the positive electrode of the power battery 30, and/or disconnect the other direct current input terminal in2 from the negative electrode of the power battery 30.

Still refer to FIG. 7. The motor controller 20 further includes a control circuit 203, and the control circuit 203 is configured to control conduction and cut-off of each switching transistor in the inverter circuit 201.

It should be understood that, for specific descriptions of a structure and a principle of the disconnection protection apparatus 202, reference may be made to related content in FIG. 4. Details are not described herein.

In some possible embodiments, the disconnection protection apparatus 202 may be assembled inside a housing of the motor controller 20, that is, the housing of the motor controller 20 is configured to accommodate the inverter circuit 201 and the disconnection protection apparatus 202.

In some possible embodiments, the disconnection protection apparatus 202 may be assembled outside the housing of the motor controller 20. For example, the disconnection protection apparatus 202 may be fastened to the housing of the motor controller 202. Alternatively, the disconnection protection apparatus 202 may be assembled on a high-voltage wire harness between the motor controller 20 and the power battery 30. This is not limited in this embodiment of this application.

Based on the foregoing solution, the disconnection protection apparatus 202 disconnects the motor controller 20 from the power battery 30 when the motor controller 20 is faulty, so that the motor controller 20 stops receiving power supply from the power battery 30, thereby preventing a fault of the motor controller 20 from affecting normal working of another component connected to the power battery 30.

In some possible embodiments, the control circuit 203 is further configured to send a fault signal to a battery management system of the power battery 30 when the motor controller 20 is faulty, where the fault signal indicates the battery management system to turn off a main positive contactor and/or a main negative contactor.

Based on the foregoing solution, when the motor controller 20 is faulty, the control circuit 203 may send the fault signal to the battery management system to indicate the battery management system to disconnect the main positive contactor and/or the main negative contactor, so as to ensure that the power battery 30 stops supplying power to the motor controller 20, thereby further improving safety and reliability of the motor controller 20.

In some possible embodiments, the motor controller 20 is used in a vehicle, and the vehicle further includes another motor controller 21 and another drive motor 41 (not shown in the figure). In a driving process of the vehicle, in response to a fault of the motor controller 21, the motor controller 20 may increase a current of a three-phase alternating current output to the drive motor 40 and power output by the motor controller 20, so as to increase torque output by the drive motor 40 and/or power of the drive motor 40, thereby reducing a power loss of the vehicle caused by the fault of the motor controller 21.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motor controller, wherein the motor controller is configured to receive electric power supplied by a power battery and output an alternating current to a drive motor to drive the drive motor;
the motor controller is configured to receive, by using a disconnection protection apparatus, electric power supplied by a direct current bus, wherein the direct current bus is configured to receive, by using a first switch, the electric power supplied by the power battery; and
when the motor controller is faulty, the disconnection protection apparatus is configured to disconnect the direct current bus from the motor controller.

2. The motor controller according to claim 1, wherein the motor controller comprises a housing, and the housing is configured to accommodate an inverter circuit and the disconnection protection apparatus.

3. The motor controller according to claim 2, wherein the motor controller comprises a control apparatus, and the control apparatus is configured to:
in response to a current passing through the disconnection protection apparatus being greater than a first current threshold, control the disconnection protection apparatus to be disconnected; or
in response to a current passing through the inverter circuit being greater than a second current threshold, control the disconnection protection apparatus to be disconnected.

4. The motor controller according to claim 2, wherein the motor controller comprises a control apparatus, the disconnection protection apparatus comprises a control circuit, and the control apparatus is configured to:
send a current signal to the control circuit, wherein the current signal indicates a value of a current passing through the disconnection protection apparatus and/or a value of a current passing through the inverter circuit; and
the control circuit is configured to:
in response to the current passing through the disconnection protection apparatus being greater than a first current threshold, control the disconnection protection apparatus to be disconnected; or
in response to the current passing through the inverter circuit being greater than a second current threshold, control the disconnection protection apparatus to be disconnected.

5. The motor controller according to claim 2, wherein the disconnection protection apparatus comprises a current sampling apparatus and a control circuit, wherein
the current sampling apparatus is configured to collect a value of a current passing through the disconnection protection apparatus, or the current sampling apparatus is configured to collect a value of a current passing through the inverter circuit; and
the control circuit is configured to:
in response to the current passing through the disconnection protection apparatus being greater than a first current threshold, control the disconnection protection apparatus to be disconnected; or
in response to the current passing through the inverter circuit being greater than a second current threshold, control the disconnection protection apparatus to be disconnected.

6. The motor controller according to any one of claims 1 to 5, wherein the motor controller comprises a control apparatus, and the control apparatus is configured to:
in response to a fault of the motor controller, send a fault signal to a battery management system of the power battery, wherein the fault signal indicates the battery management system to turn off the first switch;
wherein the disconnection protection apparatus further comprises an arc-extinguishing protection module, and the arc-extinguishing protection module is configured to perform arc-extinguishing protection when the disconnection protection apparatus is disconnected.

7. The motor controller according to any one of claims 1 to 6, wherein the motor controller is used in a vehicle, the vehicle further comprises another motor controller and another drive motor, and the another motor controller is configured to receive the electric power supplied by the power battery and drive the another drive motor; and
in a driving process of the vehicle, the motor controller is configured to:
in response to a fault of the another motor controller, increase a current of the alternating current output to the drive motor and power output to the drive motor, to increase torque output by the drive motor and/or power output by the drive motor.

8. A distributed powertrain, wherein the distributed powertrain is configured to receive electric power supplied by a power battery and is configured to drive two front wheels or two rear wheels of a vehicle, and the distributed powertrain comprises a motor controller, a first drive motor, a second drive motor, and two disconnection protection apparatuses;
the motor controller comprises a first inverter circuit and a second inverter circuit, the first inverter circuit is configured to receive, by using one disconnection protection apparatus, electric power supplied by a direct current bus and output a first alternating current to the first drive motor, and the second inverter circuit is configured to receive, by using the other disconnection protection apparatus, the electric power supplied by the direct current bus and output a second alternating current to the second drive motor, wherein the direct current bus is configured to receive, by using a first switch, the electric power supplied by the power battery;
when the first inverter circuit is faulty, the one disconnection protection apparatus is configured to disconnect the first inverter circuit from the direct current bus; and
when the second inverter circuit is faulty, the other disconnection protection apparatus is configured to disconnect the second inverter circuit from the direct current bus.

9. The distributed powertrain according to claim 8, wherein the motor controller further comprises a housing, the housing is configured to accommodate the first inverter circuit, the second inverter circuit, and the two disconnection protection apparatuses, and the housing comprises two direct current input ports and two alternating current output ports;
the first inverter circuit is connected to one direct current input port by using the one disconnection protection apparatus, and receive, through the one direct current input port, the electric power supplied by the direct current bus;
the first inverter circuit is configured to output the first alternating current through one alternating current output port;
the second inverter circuit is connected to the other direct current input port by using the other disconnection protection apparatus, and receives, through the other direct current input port, the electric power supplied by the direct current bus; and
the second inverter circuit is configured to output the second alternating current through the other alternating current output port;
wherein the motor controller comprises a control apparatus, and the control apparatus is configured to:
in response to a current passing through the one disconnection protection apparatus being greater than a first current threshold or a current passing through the first inverter circuit being greater than a second current threshold, control the one disconnection protection apparatus to be disconnected; or
in response to a current passing through the other disconnection protection apparatus being greater than a first current threshold or a current passing through the second inverter circuit being greater than a second current threshold, control the other disconnection protection apparatus to be disconnected.

10. The distributed powertrain according to claim 8 or 9, wherein the one disconnection protection apparatus comprises a first control circuit, and the other disconnection protection apparatus comprises a second control circuit, wherein
the first control circuit is configured to: in response to a current passing through the one disconnection protection apparatus being greater than a first current threshold or a current passing through the first inverter circuit being greater than a second current threshold, control the one disconnection protection apparatus to be disconnected; or
the second control circuit is configured to: in response to a current passing through the other disconnection protection apparatus being greater than a first current threshold or a current passing through the second inverter circuit being greater than a second current threshold, control the other disconnection protection apparatus to be disconnected.

11. The distributed powertrain according to claim 10, wherein the motor controller comprises a control apparatus, and the control apparatus is configured to:
send a first current signal to the one disconnection protection apparatus, wherein the first current signal indicates a value of the current passing through the one disconnection protection apparatus and/or a value of the current passing through the first inverter circuit; and
send a second current signal to the other disconnection protection apparatus, wherein the second current signal indicates a value of the current passing through the other disconnection protection apparatus and/or a value of the current passing through the second inverter circuit.

12. The distributed powertrain according to claim 10, wherein the one disconnection protection apparatus comprises a first current sampling apparatus, and the other disconnection protection apparatus comprises a second current sampling apparatus, wherein
the first current sampling apparatus is configured to collect and report, to the first control circuit, a value of the current passing through the one disconnection protection apparatus and/or a value of the current passing through the first inverter circuit; and
the second current sampling apparatus is configured to collect and report, to the second control circuit, a value of the current passing through the other disconnection protection apparatus and/or a value of the current passing through the second inverter circuit;
wherein in a driving process of the vehicle, the motor controller is further configured to:
in response to a fault of the first inverter circuit, increase a current of the second three-phase alternating current and power output by the second inverter circuit, to increase torque output by the second drive motor and/or power output by the second drive motor; and
in response to a fault of the second inverter circuit, increase a current of the first three-phase alternating current and power output by the first inverter circuit, to increase torque output by the first drive motor and/or power output by the first drive motor.

13. A vehicle, wherein the vehicle comprises a power battery, a first powertrain, and a second powertrain, the first powertrain is configured to drive two front wheels of the vehicle, and the second powertrain is configured to drive two rear wheels of the vehicle;
the first powertrain comprises a first motor controller and a first drive motor, and the first motor controller is configured to receive, by using a first disconnection protection apparatus, electric power supplied by a direct current bus and output a first alternating current to the first drive motor, wherein the direct current bus is configured to receive, by using a first switch, electric power supplied by the power battery;
the second powertrain comprises a second motor controller and a second drive motor, and the second motor controller is configured to receive, by using a second disconnection protection apparatus, the electric power supplied by the direct current bus and output a second alternating current to the second drive motor;
the first disconnection protection apparatus is configured to disconnect the first inverter circuit from the power battery when the first motor controller is faulty; and
the second disconnection protection apparatus is configured to disconnect the second inverter circuit from the power battery when the second motor controller is faulty.

14. The vehicle according to claim 13, wherein the vehicle further comprises a vehicle control unit, and the vehicle control unit is configured to:
send a first current signal to the first disconnection protection apparatus, wherein the first current signal indicates a value of a current passing through the first disconnection protection apparatus; and/or
send a second current signal to the second disconnection protection apparatus, wherein the second current signal indicates a value of a current passing through the second disconnection protection apparatus.

15. The vehicle according to claim 13or 14, wherein the first powertrain further comprises a generator, and the first motor controller further comprises a generator inverter circuit; or
the second powertrain further comprises a generator, and the second motor controller further comprises a generator inverter circuit, wherein
the generator inverter circuit is configured to receive an alternating current generated by the generator, and supply electric power to the power battery by using a third disconnection protection apparatus; and
when the generator inverter circuit is faulty, the third disconnection protection apparatus disconnects the power battery from the generator inverter circuit.
